# EUROPÄISCHE PATENTSCHRIFT

(11) **EP 1 628 741 B1**
(45) Veröffentlichungstag und Bekanntmachung des Hinweises auf die Patenterteilung: **29.04.2009**
(21) Anmeldenummer: 04735214.1
(22) Anmeldetag: 28.05.2004
(51) Int. Cl.: B01D 53/14, C10L 3/10, C07C 7/11

(54) **VERFAHREN ZUR ENTFERNUNG VON SAUERGASEN AUS UNTER DRUCK BEFINDLICHEM, MIT SAUERGASVERBINDUNGEN VERUNREINIGTEM ERDGAS UND GEWINNUNG DER ENTFERNTEN SAUERGASE AUF ERHÖHTEM DRUCKNIVEAU**
METHOD FOR REMOVING ACID GASES FROM PRESSURIZED NATURAL GAS THAT IS CONTAMINATED WITH ACID GAS COMPOUNDS AND RECOVERING THE REMOVED ACID GASES AT AN INCREASED PRESSURE LEVEL
PROCEDE POUR EXTRAIRE DES GAZ ACIDES D'UN GAZ NATUREL SOUS PRESSION CONTAMINE PAR DES COMPOSES DE GAZ ACIDES ET RECUPERATION DES GAZ ACIDES EXTRAITS A UN NIVEAU DE PRESSION SUPERIEUR

(30) Priorität: 28.05.2003 DE 10324694
(43) Veröffentlichungstag der Anmeldung: 01.03.2006
(73) Patentinhaber: Uhde GmbH, 44141 Dortmund (DE)
(72) Erfinder: MENZEL, Johannes, 45731 Waltrop (DE)
(86) Internationale Anmeldenummer: PCT/EP2004/005773
(87) Internationale Veröffentlichungsnummer: WO 2004/105919

(56) Entgegenhaltungen:
- EP-A- 0 968 748
- DE-A- 19 753 903
- US-A- 6 001 153
- US-A- 6 139 605

## Beschreibung

Die Erfindung betrifft ein Verfahren zur Sauergasentfernung aus unter Druck befindlichem, mit Schwefelverbindungen und anderen Sauergasverbindungen verunreinigtem Erdgas. Es kann genutzt werden für Erdgase, die neben Wertstoffkomponenten wie Methan und höheren Kohlenwasserstoffen Verunreinigungen wie Schwefelwasserstoff, organische Schwefelkomponenten, wie z.B. Merkaptane, und Kohlenoxydsulfid, ferner auch Kohlendioxid und Wasserdampf in unterschiedlichen Anteilen enthalten, wobei das erfindungsgemäße Verfahren insbesondere für Erdgase mit hohen Schwefelwasserstoffanteilen besonderes vorteilhaft einzusetzen ist.

In der Regel ist es notwendig, die im rohen Erdgas enthaltenen Schwefelkomponenten für die weitere technische Nutzung bis auf ppm-Gehalte aus dem Gas zu entfernen. Die Entfernung von Schwefelwasserstoff, Merkaptanen, Kohlendioxid und sonstigen Sauergasbestandteilen aus technischen Gasen erfolgt im allgemeinen mittels chemisch wirkender Absorptionsmittel, wie z. B. Aminlösungen, Alkalisalzlösungen etc. oder physikalisch wirkender Absorptionsmittel wie z.B. Selexol, Propylencarbonat, N-Methylpyrrolidon, Morphysorb, Methanol u.a., in Kreislaufsystemen, wobei physikalisch wirkende Absorptionsmittel im Gegensatz zu chemisch wirkenden Waschmitteln in der Lage sind, auch organische Schwefelkomponenten zu entfernen. Das im Gas enthaltene Kohlendioxid wird dabei je nach Zielsetzung und Aufgabenstellung entweder ganz, zum Teil oder auch so wenig wie möglich entfernt. Eine entsprechende Technologie nach dem Stand der Technik ist z.B. in der DE 197 53 903 C2 beschrieben.

Üblicherweise wird das von der Absorptionsmittelregeneration kommende Sauergas in einer Clausanlage zu Schwefel weiter verarbeitet. Neben den Investitionskosten für die eigentliche Entschwefelung der Gase müssen daher die Investitionskosten für eine Clausanlage für die Gesamtinvestitionskosten berücksichtigt werden. Umweltauflagen für den Restgehalt von Schwefelkomponenten im Abgas einer Clausanlage machen eine Nachentschwefelung des Clausabgases mittels einer sogenannten "Tail Gas Treatment Unit" erforderlich, was die Gesamtinvestitionskosten weiter deutlich erhöht. Aufgrund des weltweiten Überangebots an elementarem Schwefel, der wiederum zum größten Teil aus der Entschwefelung von Gasen stammt, welche Schwefelwasserstoff enthielten, lässt sich für den erzeugten Schwefel kaum nennenswerter Verkaufserlös erzielen, der zur Amortisation der Investitionen beitragen könnte.

Als Alternative zu der Gewinnung von elementarem Schwefel wird daher immer häufiger die Re-Injektion und Speicherung der bei der Regeneration des Absorptionsmittels freiwerdenden Sauergase in Gaskavernen in Betracht gezogen. Dabei werden die Sauergase mittels aufwändiger Gaskompressionsmaschinen auf einen Druck verdichtet, der es ermöglicht, die Sauergase in den dafür vorgesehenen unterirdischen Gasspeicher, beispielsweise ein ausgebeutetes Erdgasfeld, zu fördern. Die für die Re-Injektion notwendigen Enddrücke liegen in der Regel höher als die Drücke, bei denen die Schwefelkomponenten entfernt werden.

Für solche Zwecke wäre es besonders vorteilhaft, wenn die bei der Regeneration anfallenden Sauergase auf einem möglichst hohen Druckniveau anfielen, da dann sowohl beträchtliche Investitionskosten durch Wegfall, bzw. Verkleinerung der Kompressionsmaschinen, als auch die beträchtlichen Betriebskosten für die Sauergaskompression eingespart werden könnten. Nach dem herkömmlichen Stand der Technik werden zur Absorption von Schwefelwasserstoff, Merkaptanen, Kohlendioxid und sonstigen Sauergasbestandteilen aus Erdgasen und zur Aufbereitung der konzentrierten Sauergase für die Re-Injektion in eine Lagerstätte jedoch entweder chemisch basierte oder physikalisch basierte Absorptionsverfahren verwandt. In beiden Verfahren findet die Regeneration des Absorptionsmittels bei einem leicht erhöhten Druck von 0.1 bis 1 bar(g) statt. Bei diesem geringen Arbeitsdruck wird auch das betreffende Sauergas freigesetzt.

Der Erfindung liegt daher die Aufgabe zugrunde, ein Verfahren zur Verfügung zu stellen, welches in gleicher Weise zur Reinigung verunreinigten Erdgases und zur Bereitstellung von Sauergas unter erhöhtem Druck geeignet ist, und das Sauergas so bereitstellt, dass es in ausgebeutete oder auszubeutende Lagerstätten re-injeziert werden kann.

Die Erfindung löst die Aufgabe dadurch, dass
- das zu entschwefelnde Erdgas zunächst in eine Sauergasabsorptionsstufe geleitet wird, wo die Schwefelkomponenten sowie ggf. weitere Komponenten mittels einer physikalischen wirkenden Lösung absorbiert werden,
- das Absorbat aufgeheizt wird,
- das Absorbat in eine Hochdruck-Flashstufe gegeben wird, wo sich das einstellende Gemisch aus sauergas-armem Absorptionsmittel und desorbiertern Sauergas voneinander trennt,
- das desorbierte Sauergas gekühlt wird und das verdampfte Absorptionsmittel aus dem Sauergasstrom auskondensiert wird,
- das sauergas-arme Absorptionsmittel aus der Hochdruck-Flashstufe in einer Gas-Strippstufe mittels Strippgas von Sauergasresten befreit wird,
- in der Hochdruck-Flashstufe eine Druckeinstellung auf einen Druck erfolgt, bei dem das desorbierte Sauergas mittels Kühlwasser oder Kühlluft auskondensiert,
- wobei ein Druck in der Hochdruck-Flashstufe von 10 bis 100 bar eingestellt wird und
- die Druckeinstellung derart erfolgt, dass das desorbierte Sauergas in einem Temperaturbereich von 20°C bis 80°C überwiegend flüssig vorliegt, und
- das erhaltene Absorptionsmittel gekühlt und im Kreislauf in die Sauergasabsorptionsstufe zurückgeführt wird

Der in der Hochdruck-Flashstufe einzustellende Druck zwischen 10 und 100 bar sollte sich dabei vorzugsweise in einem Bereich von 30 bis 70 bar bewegen, dabei aber nach wie vor die Bedingung erfüllen, dass das desorbierte Sauergas in einem Temperaturbereich von 20 C bis 80 C oder noch besser von 40 C bis 60 C überwiegend flüssig vorliegt, damit es leicht kondensierbar ist. Sofern die meteorologischen Verhältnisse am Aufstellungsort der Anlage zu anderen Kühlmitteltemperaturen führen, wären dessen Temperaturen maßgeblich. Hierdurch wird es möglich, mittels Luftkühlung oder Kühlwasser das Sauergas zu kondensieren und die Re-Injektion in günstiger Weise mittels Pumpen durchzuführen, statt, wie bisher üblich, mit teuren Verdichtern, was ein Vorteil der Erfindung ist.

In einer Ausgestaltung des Verfahrens wird das erhaltene, beladene Strippgas gekühlt und in die Sauergasabsorptionsstufe geleitet. Eine solche Vorgehensweise empfiehlt sich besonders dann, wenn als Strippgas entweder gereinigtes Einsatzgas oder Erdgas verwendet wird. Durch die Rückführung werden zum einen Erdgasverluste vermieden, zum anderen ist es bei Verwendung von Erdgas nicht erforderlich, ein Fremdgas bereitzustellen.

In einer Ausgestaltung des erfindungsgemäßen Verfahrens wird
- das aus der Sauergasabsorptionsstufe kommende Absorbat vor seiner Aufheizung in eine Recycle-Flashstufe gegeben, in der eine Teildruckabsenkung erfolgt und sich das einstellende Gemisch aus Absorbat und desorbiertern Gas voneinander trennt, und
- das in der Recycle-Flashstufe erhaltene desorbierte Gas rückverdichtet und in die Sauergasabsorptionsstufe zurückgeführt.
   Der Fachmann wird eine solche Recycle-Flashstufe stets dann vorsehen, wenn das verwendete Absorptionsmittel nicht selektiv genug in Bezug auf Sauergase wirkt und auch wertvolle Erdgasbestandteile löst. Diese wertvollen Erdgasbestandteile werden zum größten Teil in der Recycle-Flashstufe desorbiert und können problemlos in die Sauergasabsorptionsstufe zurückgeführt werden.

Beispielsweise erfolgt die Teildruckabsenkung für die Recycle-Flashstufe mittels einer Einrichtung zur Rückgewinnung mechanischer Arbeit, insbesondere unter Einsatz einer Expansionsturbine oder einer rückwärts laufenden Pumpe entsprechend dem üblichen Stand der Technik.

In einer weiteren Ausgestaltung des erfindungsgemäßen Verfahrens wird das im desorbierten Sauergas enthaltene und auskondensierte Absorptionsmittel dem Absorbat vor der Aufheizung zugemischt.

In weiteren Ausgestaltungen des erfindungsgemäßen Verfahrens wird der Druck des zur Aufheizung geführten Absorbats auf einen Druck gebracht, der wenigstens höher als der in der Recycle-Flashstufe ist, sofern eine solche vorgesehen wird. - Günstig ist es, den Druck in der Hochdruck-Flashstufe so hoch wie prozesstechnisch möglich zu wählen, so dass dieser in der Regel höher als in der Recycle-Flashstufe ist, sofern eine solche vorgesehen wird, da dies von Vorteil für die weitere Re-Injektion des Sauergases ist. Noch günstiger ist es, wenn das gesamte Druckniveau so hoch gehoben werden kann, dass es immer oberhalb des Drucks der Sauergasabsorptionsstufe ist, weil dann die rückzuführenden Gasströme nicht mehr verdichtet werden müssen.

In weiteren Ausgestaltungen des erfindungsgemäßen Verfahrens werden alternativ das beladene Strippgas und das aus der Recycle-Flashstufe, sofern vorgesehen, erhaltene Gas zusammengeführt, und dann mit nur einer Kompressionsmaschine rückverdichtet und zusammen in die Sauergasabsorptionsstufe geleitet oder das zum Einsatz kommende Strippgas auf einen Druck oberhalb des Drucks der Sauergasabsorption gebracht, das beladene Strippgas und das aus der Recycle-Flashstufe erhaltene Gas zusammengeführt und zusammen in die Sauergasabsorption geleitet. Vorteilhafterweise erfolgt die Einleitung in die Sauergasabsorptionsstufe bei der Einleitung des Einsatzgases.

In einer weiteren Ausgestaltung des erfindungsgemäßen Verfahrens wird die Hochdruck-Flashstufe als Kaskade mehrerer hintereinander angeordneter Flashbehälter mit vorheriger Teildruckabsenkung und Rückverdichtung der aus den weiteren Flashbehältern jeweils erhaltenen Sauergase auf den Druck des ersten Flashbehälters ausgeführt. Hierbei wird der größte Teil des Sauergases im ersten dieser Flashbehälter freigesetzt.

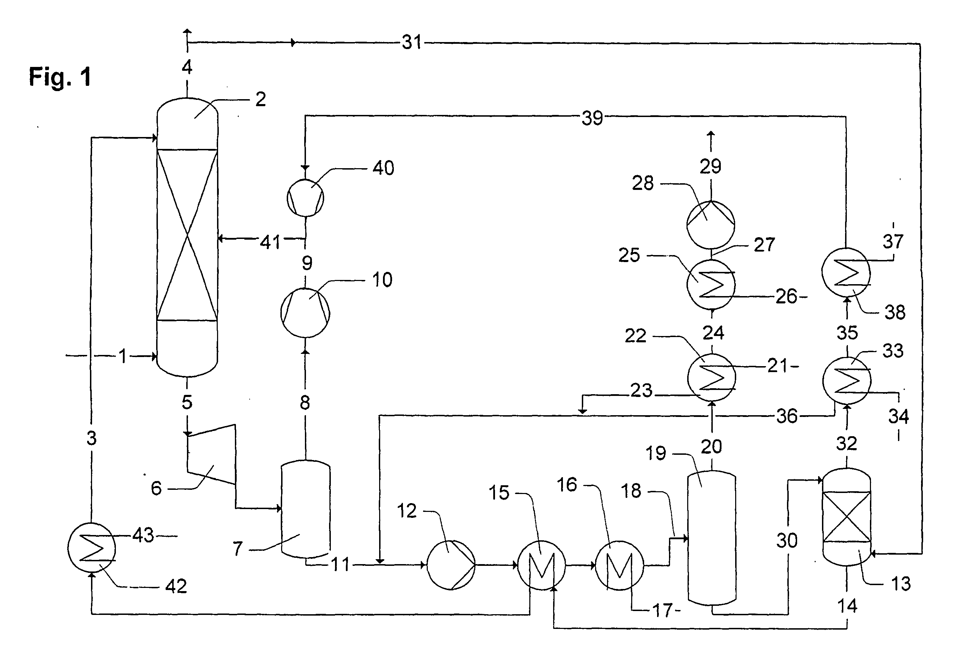

Die Erfindung wird nachfolgend anhand eines Verfahrensschemas in Fig. 1 näher erläutert: Fig. 1 zeigt das erfindungsgemäße Verfahren, bestehend aus einer Sauergasabsorptionsstufe, 2 Flashstufen, einer Gas-Strippstufe sowie die Verfahrensführung der wesentlichen Ströme, wobei das erfindungsgemäße Verfahren aber nicht auf diese beispielhafte Ausführungsform beschränkt ist.

Das rohe Erdgas 1 wird zunächst in den Sumpfbereich der als Absorptionskolonne 2 ausgeführten Sauergasabsorptionsstufe geführt, wobei die im Gas enthaltenen Sauergaskomponenten im Gegenstrom durch das auf den Kopf der Absorptionskolonne 2 aufgegebene, regenerierte Absorbens 3 entfernt werden. Das gereinigte Produktgas 4 wird dabei am Kopf der Absorptionskolonne abgezogen. Das am Sumpf der Absorptionskolonne 2 abgezogene, mit Sauergasen beladene Absorptionsmittel 5 wird mittels einer Entspannungsturbine 6 in einen Flashbehälter 7 entspannt. Die durch die Druckabsenkung freiwerdenden Flashgase 8 enthalten den größten Teil der bei der Absorption aus dem rohen Erdgas 1 mitabsorbierten Kohlenwasserstoffe im Recyclegasstrom 9. Diese werden mittels eines Recyclekompressors 10 wieder in die Absorptionskolonne 2 zurückgeführt.

Die den Flashbehälter 7 verlassende, hauptsächlich nur noch mit Sauergaskomponenten beladene Absorptionslösung 11 wird mittels einer Pumpe 12 auf einen Druck gebracht, der ermöglicht, das in der Hochdruckflashstufe freigesetzte Sauergas mittels Kühlwasser oder in einem Luftkühler zu kondensieren. Nach Wärmetausch mit der heißen, vom Hochdruckdesorptionskolonne 13 kommenden, regenerierten Absorptionslösung 14 im Wärmetauscher 15 und weiterer Vorwärmung mittels Vorwärmer 16 durch einen Wärmeträgerstrom 17 wird die beladene Lösung 18 in einen Hochdruckflashbehälter 19 geflasht. Dabei wird ein großer Teil der in der Absorptionslösung gelösten Sauergase 20 über Kopf freigesetzt. Durch den mit einem Kühlmedium 21 beaufschlagten Kühler 22 wird das in den Sauergasen enthaltene Absorptionsmittel auskondensiert und das Kondensat 23 wird dem Kreislauf wieder zugeführt. Die Sauergasfraktion 24 wird dann im Sauergaskondensator 25 mittels Kühlwasser 26 weiter gekühlt und dadurch verflüssigt. Das verflüssigte Sauergas 27 wird mittels der Pumpe 28 auf den für die Re-Injektion notwendigen Druck gebracht und als Re-Injektions-Strom 29 in das Endlager gefördert.

Um die restlichen Sauergaskomponenten noch zu entfernen, die im den Hochdruckflashbehälter 19 verlassenden Absorptionsmittelstrom 30 noch enthalten sind, wird dieser Strom auf den Kopf einer Hochdruckdesorptionskolonne 13 geführt. In der Hochdruckdesorptionskolonne 13 wird die von oben kommende, angereichtere Lösung im Gegenstrom mittels schwefelfreiem oder -armem Erdgas 31, welches als Teilstrom aus dem gereinigten Produktgas 4 abgezogen wird, von den im Absorptionsmittelstrom 30 noch enthaltenen, restlichen Sauergaskomponenten, insbesondere auch von den Schwefelkomponenten befreit, wobei die in der Hochdruckdesorptionskolonne 13 enthaltenen Stoffaustauschelemente, wie z.B. Ventilböden, Füllkörper oder strukturierte Packung für den notwendigen Stoffübergang dienen. Am Kopf der Hochdruckdesorptionskolonne 13 wird eine konzentrierte Sauergasfraktion 32 gewonnen.

Die am Kopf der Hochdruckdesorptionskolonne 13 austretende konzentrierte Sauergasfraktion 32 wird zur Absorptionsmittelrückgewinnung noch durch einen Kühler 33 mittels eines Kühlmittels 34, z.B. Kühlwasser oder Kühlluft, gekühlt und verlässt den Kühler als Sauergasstrom 35. Das zurückgewonnene Absorptionsmittel 36 wird mit dem beladenen Absorptionsmittel 11 auf der Saugseite der Pumpe 12 zusammen geleitet. Der Sauergasstrom 35 wird mittels eines mit Kühlmittel 37 beaufschlagten Kühlers 38 weiter abgekühlt und als gekühltes Sauergas 39 im Verdichter 40 verdichtet, bevor er zusammen mit dem Recyclegasstrom 9 als Rückführstrom 41 wieder in die Absorptionskolonne 2 zurückgeführt wird. Die vollständig regenerierte Absorptionslösung 14 wird nach Wärmetausch im Wärmetauscher 15 und Kühlung im Kühler 42, der mittels Kühl- oder Kältemittelmedium 43 die regenerierte Absorptionslösung auf die gewünschte Absorptionsmitteltemperatur herunterkühlt zur spezifikationsgerechten Absorption der im rohen Erdgas 1 enthaltenen Sauergaskomponenten zum Kopf der Absorptionskolonne 2 geführt.

Tabelle 1 zeigt nachfolgend ein berechnetes Beispiel, die Stromnummem entsprechen mit Ausnahme von Strom 31 denen in Fig. 1. Strom 31 ist im Rechenbeispiel ein extern zugeführter, reiner Methanstrom.

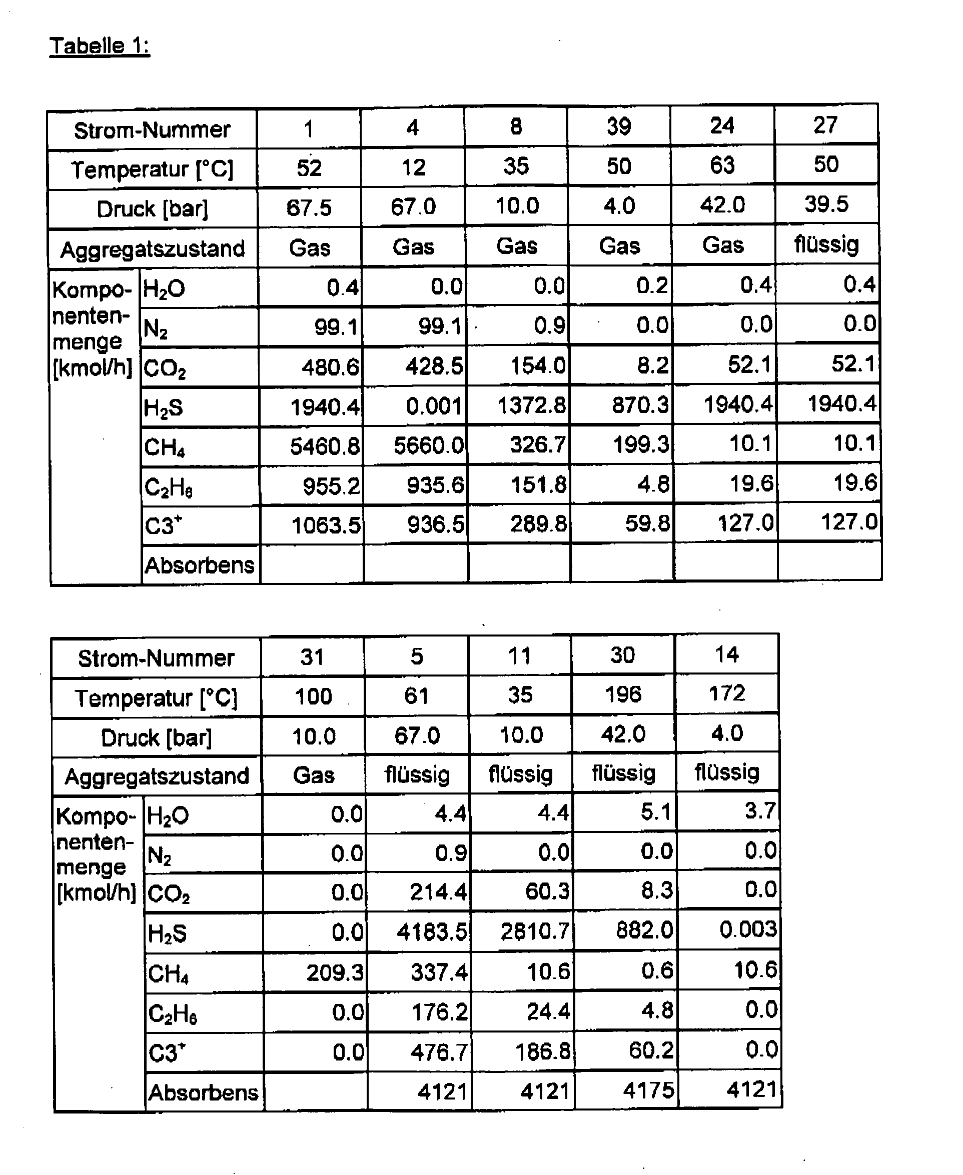

Bezugszeichenliste

| | |
|---|---|
| 1 | rohes Erdgas |
| 2 | Absorptionskolonne |
| 3 | regeneriertes Absorbens |
| 4 | gereinigtes Produktgas |
| 5 | beladenes Absorptionsmittel |
| 6 | Entspannungsturbine |
| 7 | Flashbehälter |
| 8 | Flashgas |
| 9 | Recyclegasstrom |
| 10 | Recyclekompressor |
| 11 | beladene Absorptionslösung |
| 12 | Pumpe |
| 13 | Hochdruckdesorptionskolonne |
| 14 | regenerierte Absorptionslösung |
| 15 | Wärmetauscher |
| 16 | Vorwärmer |
| 17 | Wärmeträgerstrom |
| 18 | beladene Lösung |
| 19 | Hochdruckflashbehälter |
| 20 | Sauergas |
| 21 | Kühlmedium |
| 22 | Kühler |
| 23 | Kondensat |
| 24 | Sauergasfraktion |
| 25 | Sauergaskondensator |
| 26 | Kühlwasser |
| 27 | verflüssigtes Sauergas |
| 28 | Pumpe |
| 29 | Re-Injektions-Strom |
| 30 | Absorptionsmittelstrom |
| 31 | schwefelfreies Erdgas |
| 32 | konzentrierte Sauergasfraktion |
| 33 | Kühler |
| 34 | Kohlmittel |
| 35 | Sauergasstrom |
| 36 | zurückgewonnenes Absorptionsmittel |
| 37 | Kühlmittel |
| 38 | Kühler |
| 39 | gekühltes Sauergas |
| 40 | Verdichter |
| 41 | Rückführstrom |
| 42 | Kühler |
| 43 | Kühl- oder Kältemedium |

## Patentansprüche

1. Verfahren zur Sauergasentfernung aus unter Druck befindlichem, mit Schwefelverbindungen und anderen Sauergasverbindungen verunreinigtem Erdgas, wobei
• das zu entschwefelnde Erdgas (1) zunächst in eine Sauergasabsorptionsstufe (2) geleitet wird, wo die Schwefelkomponenten sowie ggf. weitere Komponenten mittels einer physikalischen wirkenden Lösung absorbiert werden,
• das Absorbat aufgeheizt wird,
• das Absorbat (18) in eine Hochdruck-Flashstufe (19) gegeben wird, wo sich das einstellende Gemisch aus sauergasarmem Absorptionsmittel und desorbiertern Sauergas voneinander trennt,
• das desorbierte Sauergas (20) gekühlt wird und das verdampfte Absorptionsmittel aus dem Sauergasstrom auskondensiert wird,
• das sauergasarme Absorptionsmittel (30) aus der Hochdruck-Flashstufe (19) in einer Gas-Strippstufe (13) mittels Strippgas (31) von Sauergasresten befreit wird, und
• das erhaltene Absorptionsmittel gekühlt (15, 42) und im Kreislauf in die Sauergasabsorptionsstufe (2) zurückgeführt wird,
**dadurch gekennzeichnet, dass**
• in der Hochdruck-Flashstufe (19) eine Druckeinstellung auf einen Druck erfolgt, bei dem das desorbierte Sauergas mittels Kühlwasser oder Kühlluft auskondensiert,
• wobei ein Druck in der Hochdruck-Flashstufe (19) von 10 bis 100 bar eingestellt wird und
• die Druckeinstellung derart erfolgt, dass das desorbierte Sauergas in einem Temperaturbereich von 20°C bis 80°C überwiegend flüssig vorliegt.

2. Verfahren nach Anspruch 1, **dadurch gekennzeichnet, dass** das erhaltene, beladene Strippgas (31) gekühlt und in die Sauergasabsorptionsstufe geleitet wird.

3. Verfahren nach einem der Ansprüche 1 oder 2, **dadurch gekennzeichnet, dass** als Strippgas (31) entweder gereinigtes Einsatzgas oder entschwefeltes Erdgas verwendet wird.

4. Verfahren nach einem der Ansprüche 2 oder 3, **dadurch gekennzeichnet, dass** die Einleitung in die Sauergasabsorptionsstufe (2) bei der Einleitung des Einsatzgases (1) erfolgt.

5. Verfahren nach einem der Ansprüche 1 bis 4, **dadurch gekennzeichnet, dass** das im desorbierten Sauergas (20) enthaltene Absorptionsmittel auskondensiert (23) und dem Absorbat (11) vor der Aufheizung zugemischt wird.

6. Verfahren nach einem der Ansprüche 1 bis 5, **dadurch gekennzeichnet, dass** der Druck des zur Aufheizung geführten Absorbats (11) auf einen Druck gebracht wird, der höher als der in der Sauergasabsorptionsstufe (2) ist.

7. Verfahren nach einem der Ansprüche 2 bis 6, **dadurch gekennzeichnet, dass** das zum Einsatz kommende Strippgas (31) auf einen Druck oberhalb des Drucks der Sauergasabsorption gebracht und in die Sauergasabsorption geleitet wird.

8. Verfahren nach einem der Ansprüche 1 bis 7, **dadurch gekennzeichnet, dass**
• das aus der Sauergasabsorptionsstufe (2) kommende Absorbat vor seiner Aufheizung in eine Recycle-Flashstufe (7) gegeben wird, in der eine Teildruckabsenkung erfolgt und sich das einstellende Gemisch aus Absorbat und desorbiertern Gas voneinander trennt, und
• das in der Recycle-Flashstufe (7) erhaltene desorbierte Gas rückverdichtet (10) und in die Sauergasabsorptionsstufe (2) zurückgeführt wird.

9. Verfahren nach Anspruch 8, **dadurch gekennzeichnet, dass** der Druck des zur Aufheizung geführten Absorbats (11) auf einen Druck gebracht wird, der höher als der in der Recycle-Flashstufe (7) ist.

10. Verfahren nach einem der Ansprüche 8 oder 9, **dadurch gekennzeichnet, dass** der Druck in der Hochdruck-Flashstufe (19) höher als der in der Recycle-Flashstufe (7) ist.

11. Verfahren nach einem der Ansprüche 8 bis 10, **dadurch gekennzeichnet, dass** das beladene Strippgas (39) und das aus der Recycle-Flashstufe (7) erhaltene Gas (9) zusammengeführt, rückverdichtet und zusammen in die Sauergasabsorptionsstufe geleitet werden.

12. Verfahren nach einem der vorangegangenen Ansprüche 1 bis 12, **dadurch gekennzeichnet, dass** die Hochdruck-Flashstufe (19) als Kaskade mehrerer hintereinander angeordneter Flashbehälter mit vorheriger Teildruckabsenkung und Rückverdichtung der aus den weiteren Flashbehältern jeweils erhaltenen Sauergase auf den Druck des ersten Flashbehälters der Kaskade ausgeführt wird.

## Claims

1. Process for the removal of sour gas from pressurised natural gas which is polluted by sulphur compounds and other sour gas compounds,
• the natural gas (1) to be desulphurised being initially fed to a sour gas absorption unit (2), in which the sulphur components and any other components, if any, are absorbed by a physically acting solution,
• the absorbate being heated,
• the absorbate (18) being fed to a high-pressure flash unit (19), in which the sour-gas-poor absorbent and desorbed sour gas contained in the resulting mixture are separated,
• the desorbed sour gas (20) being cooled and the vaporised absorbent being condensed out of the sour gas stream,
• the sour-gas-poor absorbent originating from the high-pressure flash unit (19) being freed from residual sour gas in a gas stripping unit (13) by means of a stripping gas (31), and
• the absorbent obtained (15, 42) being cooled and recycled to the sour gas absorption unit (2),
**characterised in that**
• a pressure is set in the high-pressure flash unit (19) that permits the desorbed sour gas to be condensed by means of cooling water or cooling air,
• the pressure set in the high-pressure flash unit (19) ranging from 10 to 100 bars, and
• the pressure setting being performed such that the desorbed sour gas is present mainly in liquid form in a temperature range of 20°C to 80°C.

2. Process in accordance with Claim 1, **characterised in that** the laden stripping gas obtained (31) is cooled and fed to the sour gas absorption unit.

3. Process in accordance with any one of the preceding Claims 1 or 2,
**characterised in that** either purified feed gas or desulphurised natural gas are used as stripping gas (31).

4. Process in accordance with any one of the preceding Claims 2 or 3,
**characterised in that** the stripping gas is fed to the sour gas absorption unit (2) simultaneously with the feed gas (1).

5. Process in accordance with any one of the preceding Claims 1 to 4,
**characterised in that** the absorbent (23) contained in the desorbed sour gas (20) is condensed out and admixed to the absorbate (11) prior to heating the absorbate.

6. Process in accordance with any one of the preceding Claims 1 to 5,
**characterised in that** the pressure of the absorbate to be heated (11) is set to a value that is higher than that in the sour gas absorption unit (2).

7. Process in accordance with any one of the preceding Claims 2 to 6,
**characterised in that** the pressure of the stripping gas used (31) is set to a value above that of the sour gas absorption unit and then fed to the said sour gas absorption unit.

8. Process in accordance with any one of the preceding Claims 1 to 7,
**characterised in that**
• Prior to being heated, the absorbate from the sour gas absorption unit (2) is fed to a recycle flash unit (7), in which a partial pressure reduction takes place, and the absorbate and desorbed gas contained in the resulting mixture are separated, and
• The desorbed gas obtained in the recycle flash unit (7) is re-compressed (10) and recycled to the sour gas absorption unit (2).

9. Process in accordance with Claim 8, **characterised in that** the pressure of the absorbate (11) to be heated is set to a pressure that is higher than that in the recycle flash unit (7).

10. Process in accordance with any one of the preceding Claims 8 or 9,
**characterised in that** the pressure in the high-pressure flash unit (19) is higher than that in the recycle flash unit (7).

11. Process in accordance with any one of the preceding Claims 8 to 10,
**characterised in that** the laden stripping gas (39) and the gas (9) obtained in the recycle flash unit (7) are combined, re-compressed and fed together to the sour gas absorption unit (2).

12. Process in accordance with any one of the preceding Claims 1 to 12,
**characterised in that** the high-pressure flash unit (19) consists of a cascade of several series-connected flash vessels preceded by a partial pressure reduction and re-compression of the sour gases obtained from the downstream flash vessels to the pressure of the first flash vessel of the cascade.

## Revendications

1. Procédé pour extraire des gaz acides d'un gaz naturel sous pression contaminé par des composants de sulfure et d'autres composants de gaz acide, conformément aux détails technologiques suivants:
• Le gaz naturel (1) à désulfurer est d'abord introduit dans une unité d'absorption de gaz acide (2), dans laquelle les composants de sulfure et d'autres composés, s'il y en a, sont absorbés à l'aide d'une solution agissant de manière physique,
• la matière absorbée est réchauffée,
• la matière absorbée (18) est ensuite envoyée à une unité de détente haute pression (19), dans laquelle l'absorbant pauvre en gaz acide et le gaz acide absorbé contenus dans le mélange obtenu sont séparés,
• le gaz acide désorbé (20) étant refroidi et l'absorbant évaporé étant séparé du courant de gaz acide par condensation,
• l'absorbant pauvre en gaz acide (30) et provenant de l'unité de détente haute pression (19) est ensuite libéré du gaz acide résiduaire dans une unité de stripage (13), à l'aide d'un gaz de stripage (31), et
• l'absorbant obtenu (15, 42) étant ensuite refroidi et retourné vers l'unité d'absorption de gaz acide (2),
**caractérisé en ce que**
• l'unité de détente haute pression (19) est mise sous une pression qui permet une condensation du gaz acide désorbé à l'aide de l'eau de refroidissement ou de l'air de refroidissement,
• la pression appliquée dans l'unité de détente haute pression (19) se situe dans la gamme de 10 à 100 bars, et
• le réglage de la pression a lieu de telle sorte que le gaz acide désorbé soit principalement présent sous forme liquide, à une température de 20 à 80°C.

2. Procédé selon la revendication No. 1, **caractérisé en ce que** le gaz de stripage (31) obtenu et chargé est refroidi et envoyé vers l'unité d'absorption de gaz acide.

3. Procédé selon l'une des revendications précédentes Nos. 1 ou 2,
**caractérisé en ce que** du gaz purifié ou du gaz naturel désulfurisé est mis en oeuvre comme du gaz de stripage (31).

4. Procédé selon l'une des revendications précédentes Nos. 2 ou 3,
**caractérisé en ce que** le gaz de stripage est introduit dans l'unité d'absorption de gaz acide (2) simultanément avec la gaz d'alimentation (1).

5. Procédé selon l'une des revendications précédentes Nos. 1 à 4,
**caractérisé en ce que** l'absorbant (23) contenu dans le gaz acide désorbé (20) est séparé par condensation et ensuite mêlé avec l'absorbat (11) avant le réchauffage.

6. Procédé selon l'une des revendications précédentes Nos. 1 à 5,
**caractérisé en ce que** la pression de l'absorbat à réchauffer (11) est ajustée à une valeur qui dépasse celle régnant dans l'unité d'absorption de gaz acide (2).

7. Procédé selon l'une des revendications précédentes Nos. 2 à 6,
**caractérisé en ce que** le gaz de stripage mis en oeuvre (31) est mis sous pression de telle sorte que la valeur respective dépasse celle régnant dans l'unité d'absorption de gaz acide et que le dit gaz est ensuite envoyé vers la dite unité d'absorption.

8. Procédé selon l'une des revendications précédentes Nos. 1 à 7,
**caractérisé en ce que**
• avant de son réchauffage, l'absorbat venant de l'unité d'absorption de gaz acide (2) est introduit dans une unité de détente de recyclage (7), dans laquelle a lieu une réduction partielle de la pression, et le mélange y résultant contient l'absorbat et le gaz désorbé qui se séparent à la suite, et
• le gaz désorbé (10) obtenu dans l'unité de détente de recyclage (7) est re-comprimé et recyclé vers l'unité d'absorption de gaz acide (2).

9. Procédé selon la revendication No. 8, **caractérisé en ce que** la pression de l'absorbat (11) à réchauffer est mis sous une pression qui dépasse celle régnant dans l'unité de détente de recyclage (7).

10. Procédé selon l'une des revendications précédentes Nos.8 ou 9,
**caractérisé en ce que** la pression dans l'unité de détente haute pression (19) dépasse celle régnant dans l'unité de détente de recyclage (7).

11. Procédé selon l'une des revendications précédentes Nos. 8 à 10,
**caractérisé en ce que** le gaz de stripage chargé (39) et le gaz (9) obtenu dans l'unité de détente de recyclage (7) sont combinés, recomprimés et envoyés ensemble vers l'unité d'absorption de gaz acide (2).

12. Procédé selon l'une des revendications précédentes Nos. 1 à 12,
**caractérisé en ce que** l'unité de détente haute pression (19) consiste en une cascade de plusieurs récipients de détente connectés en série et combinés en amont avec une réduction partielle de la pression et une recompression des gaz venant d'autres récipients disposés en aval, à la pression qui règne dans le premier récipient de détente de la dite cascade.
